# EUROPEAN PATENT SPECIFICATION

(11) **EP 4 061 588 B1**
(45) Date of publication and mention of the grant of the patent: **22.01.2025**
(21) Application number: 20890832.7
(22) Date of filing: 18.11.2020
(51) Int. Cl.: B25J 11/00, B25J 13/00, B25J 5/00, B25J 9/00, B25J 9/16, B60K 1/02, B60K 1/04, B60K 7/00, F41H 7/00

(54) **TWO WHEEL ROBOT WITH CONVERTIBILITY AND ACCESSORIES**
ZWEIRÄDRIGER ROBOTER MIT KONVERTIBILITÄT UND ZUBEHÖR
ROBOT À DEUX ROUES AVEC CONVERTIBILITÉ ET ACCESSOIRES

(30) Priority: 18.11.2019 US 201962936963 P
(43) Date of publication of application: 28.09.2022
(73) Proprietor: ReconRobotics, Inc., Edina, MN 55439 (US)
(72) Inventor: KOSSETT, Alex J., Minnetonka, Minnesota 55345 (US); DRENNER, Andrew, Savage, Minnesota 55378 (US); BROMBACK, Luke William, Minneapolis, Minnesota 55404 (US); LAFAVE, Collin, Ellsworth, Wisconsin 54011 (US)
(74) Representative: Gleim Petri Patent- und Rechtsanwaltspartnerschaft mbB
(86) International application number: PCT/US2020/061137
(87) International publication number: WO 2021/102060

(56) References cited:
- EP-A1- 2 735 497
- WO-A1-2010/030055
- WO-A1-2013/059519
- CN-A- 104 802 588
- CN-A- 106 002 915
- CN-U- 203 266 631
- CN-U- 204 077 847
- US-A1- 2012 059 520
- US-A1- 2012 273 284
- US-A1- 2018 290 312
- US-A1- 2019 054 633
- US-A1- 2019 092 406
- US-A1- 2019 092 406

## Description

### CROSS-REFERENCE TO RELATED APPLICATION

The application claims priority to U.S. Provisional Application 62/936,963 filed November 18, 2019.

This application is related to U.S. Pat. Nos. 10,526,029 and 10,828,973, The '973 patent also claims priority to the 62/936,963 provisional application.

### BACKGROUND OF THE INVENTION

Throwable robots used in military and policing operations need to be robust and able to survive exposure to rugged conditions including exposure to dirt and water and large vertical drops. Providing modularity and flexibility in attaching useful accessories that may be securely attached thereto and that would be protected from damage during use would be welcome by users. The interchangeability of accessories is of particular interest to military and law enforcement personnel as this allows a single robot to be reconfigured to meet certain mission specific needs. Any improvements in adding functionalities, reliability and performance for robots used in high stakes military and police operations are desirable. In particular, improvements in protecting accessories attached to throwable robots, would be well received by users of such robots. Document US2019/092406A1 discloses a two wheeled robot with convertibility and accessories. Document US2012/279284A1 discloses a robotic two-wheeled vehicle.

### SUMMARY OF THE INVENTION

A combination throwable two wheeled robot with one or more removable accessory packs provide functional options for the robot that may be swapped out in the field by users. In embodiments, the one or more accessory packs are protected from damage upon impacts resulting from throws or drops by way of utilizing existing features and the geometries of such two wheeled robot and specific features, configurations of the accessories. The accessory, configured as a backpack attachable to the robot, may be secured to the body of the robot where the tail would conventionally be, with the tail then secured to the backpack. In embodiments the accessory may protected from direct impacts when thrown by being positioned within a protected zone or envelope defined by the maximum deflection of the wheels. Additionally, the protected zone may be provided by the rearward projecting tail and its resistance to deflection upon impact. In embodiments, where the accessory protrudes beyond the zone of impact, an elastomeric bumper may be provided to the projection such that the elastomeric material absorbs the shock of impact rather than the accessory.

Known throwable two wheeled robots have an elongate body defining a chassis extending between and supporting a pair of drive wheels and further having a ground engaging tail extending rearwardly from the elongate body. Control circuitry, power circuitry, motors, drive trains, transceivers, cameras may all be located in the elongate body and thereby are protected by the compressible and resilient wheels and the integrity of the elongate body. In certain of such robots, the wheels may be compressed due to impacts from throwing or falls a limited amount, the elongate body is sized such maximum deflection or compression of the wheels upon a flat surface does not allow contact of the elongate body with the impact surface as clearance is provided between the maximum deflection point of the pair of wheels and the elongate body from impacts with flat surfaces. The space between the elongate body and the maximum deflection of the wheels provides a zone of protection to the accessories. The inventors have identified that impacts on accessories mounted to the robot that extend beyond the zone of protection, can directly damage the robot as well as the accessory. In embodiments, where the accessory protrudes beyond the zone of protection, an elastomeric bumper may be added. In embodiments, the accessory may have an elastomeric member sandwiched between the accessory and the elongate body, providing further protection to the robot.

The accessory packs may include a backpack containment that may be mountable on the chassis of the robot. In embodiments, the backpack unit defines a cavity that is covered by a cover. Suitable components are located in the backpack cavity dependent upon the functionalities of the backpack. The components including circuitry, the circuitry may be connected to circuitry in the elongate body by way of cables and connectors such as a USB connector. The accessory may then have an additional externally accessible USB connector. Such a connector may be a power port or a port for charging the robot or batteries in the accessory. In embodiments, the robot includes a tail having a mounting portion that is mountable to either a landing portion of the backpack or a landing portion of the robot chassis. In embodiments, when the backpack unit is placed on a rearward side of the body of the robot without the tail on the robot, before the backpack is secured with threaded fasteners attaching the backpack unit to the robot, the backpack unit has one degree of freedom of motion relative to robot, the one degree of freedom allowing the backpack unit to be pulled outwardly away from the robot. In embodiments, on an end view, both sides of the accessory may be simultaneously separated from the robot in a single outward direction. In embodiments, on an end view, one side of the accessory may be positioned in an undercut region such that the other side of the accessory is rotated outwardly about the one side before the one side may be separated.

In embodiments, each of the wheels have an undeflected radius, and each wheel is deflectable upon impact when thrown to a maximum deflected or deformed radius defining generally a cylindrical envelope and wherein the space between the elongate body and the outer periphery of the cylindrical envelope defining an annular accessory mounting space. In embodiments, the backpack unit is entirely within the annular accessory mounting space, when the robot interfacing portion of the backpack body is mated with the landing portion of the chassis and the tail interfacing portion of the backpack body is mated with mounting portion of the tail. In embodiments, the backpack body extends rearwardly from the robot chassis and the tail extends rearwardly from the backpack. In embodiments, the tail providing an additional protective envelope portion continuous with the accessory mounting space in that the tail has rigidity that precludes both wheels from simultaneously contacting or fully compressing to the maximum deflection level when the impact is on the tail side of the robot impacting a flat.

In embodiments, the body has four sides, a top side, a bottom side, a rearward side, and a forward side. The body comprising a chassis with sidewalls and exterior sidewall surfaces and providing an accessory mounting interface. The chassis having a side with a planar landing having a matrixical arrangement of threaded holes. The landing having an outwardly facing landing surface with hole openings at the landing surface. The landing having landing sides with sidewall surfaces extending in an inward direction for the landing. In embodiments, the landing with a planar landing surface has recesses therein spaced from the threaded holes. In embodiments the accessory mounting interface comprising at least two adjacent sides, each side having planar side surfaces with the planar surface on one of the two adjacent sides being perpendicular to the planar surface on the other of the two adjacent sides.

In embodiments, each of the at least two adjacent side surfaces have projections with outwardly facing landings, and the landings have a matrixical arrangement of threaded holes, the threaded holes extending toward the open interior but not into the open interior. In embodiments, the landing having a planar outwardly facing surface. The threaded holes being perpendicular to an outer surface of the landing. The projections having projection sidewall surfaces leading to the respective landing surface. The projections of each side being unitary with one of the chassis portions.

In embodiments, the accessory is attached within the cylindrical envelope. The accessory having mating projections that extend below the landing surfaces and are positioned to abut against projection sidewalls or positioned in recesses.

The accessory, when positioned on the exterior surface of the robot, may have a single degree of freedom. In embodiments the single degree of freedom is in the same direction as the axis of at least on threaded hole. The accessory may be attached with a plurality of threaded fasteners extending inwardly and being within the cylindrical envelope. The accessory may have surfaces for abutting with the projection sidewall surfaces and/or for fitting into recesses on the respective sides of the robot.

In embodiments the projections have a landing with projection side walls, the projection defining a rail attachment portion aligned with the axis of the elongate body, in embodiments the rail having a dovetail cross-section. In embodiments the rail may be configured as a Picatinny rail extending in a direction from wheel to wheel. The accessory having a clamp for attachment to the rail. The projections being unitary with chassis portions, the chassis portions defining a chassis interior that secures therein at least one motor, at least one battery, radio and control circuitry.

In embodiments, the at least one landing having inwardly extending recesses for capturing portions of the accessory. The recesses extending inwardly in the same direction as the threaded holes.

In embodiments, a forwardly directed camera is supported by the robot body. In embodiments, a plurality of robot components are mounted in an open interior of the chassis. In embodiments, the plurality of components include at least one motor, a circuit board with processing circuitry, and a battery.

In embodiments, a throwable robot has only two motorized wheels supported by a body, the body comprising a housing with a matrixical arrangement of threaded holes extending into an exterior surface of the housing, the matrixical arrangement extending at least most of the distance between the two wheels. In embodiments, the matrixical arrangement has at least one row of threaded holes in alignment, the at least one row comprising at least four holes. In embodiments, the row comprises at least three holes in alignment. In embodiments, the matrixical arrangement comprises at least two rows of threaded holes, with adjacent pairs of holes having equal spacing between the holes. In embodiments, at least two adjacent sides each have a matrixical arrangement of holes. The threaded holes not extending through the walls of the housing thereby maintaining a watertight integrity of the enclosure. In embodiments, the entries of the threaded holes comprising the matrixical arrangement are coplanar.

A feature and advantage of embodiments is that a robot and accessory combination having a weight that allows the combination to be thrown over obstacles such as fences and/or walls. In embodiments, the robot and accessory combination has a weight of less than five pounds.

In embodiments, the wheels are separated from each other a distance between 127 and 177.8 millimetres. The matrixical arrangement of mounting holes for backpack accessories have a separation between adjacent holes of about 25.4 millimetres. In embodiments, the hole separation is 22.86 to 27,94 millimetres. In embodiments, the length of the backpack accessory that seats on the top and/or back side of the elongate body is between 114.3 millimetres and 146,05 millimetres. The attachment holes are separated by 25.4 millimetres or a multiple of 25.4 millimetres such that the holes mate with the accessory backpack mounting holes on the elongate chassis.

A feature and advantage of embodiments is that a robot and accessory combination with a level of impact resistance/shock absorbing that allows the robot to continue a mission after experiencing a significant drop, such as driving off a floor of a multiple story building dropping to a floor below. In embodiments, the robot and accessory is configured to experience a three story drop without loss of functionality. The maximum deflectibility of the wheels when the robot is dropped 9.144 metres can define the zone of protection or annular mounting space for accessories.

In embodiments, the robot and accessory combination has a 9.144 metres drop rating, indicating that the combination can be dropped a distance of 9.144 metres without damage. In embodiments, each of the wheels deflect to a maximum deflection in a radial direction when dropped from 9.144 metres, and wherein when each of the wheels deflect said maximum deflection, the chassis and payload do extend outwardly to or past said maximum deflection. A feature and advantage of embodiments is that a robot with an accessory mounted thereto by threaded fasteners, such as screws, may be thrown and the accessory/robot interface distributes shear forces from impact of the robot with a floor or ground to abutting surfaces between the accessory and the robot rather than to the screws or threaded fasteners securing the accessory to the robot.

A feature and advantage of embodiments is that the matrixical arrangement of holes may be utilized for adjustable mounting accessories and portions of the robot. For example different tails may be utilized. And a specific tail may be mounted in different orientations to angularly position a forward facing fixed camera or accessory on the robot as desired. For example, the tail may be rotated 180 degrees to provide a different angle of viewing for a camera directed forwardly from the housing.

A feature and advantage of embodiments is a two wheeled robot having a chassis extending between two motorized radially deformable resilient wheels, and a tail extending rearwardly. The radially deformable resilient wheels having an undeformed radius, a flat surface operational deflection, and a maximum radial deformation on impact. The maximum radial deformation defining a cylindrical component protection envelope extending between the wheels. The flat surface operational deflection defining a cylindrical region and an obstacle clearance below the chassis. The two wheeled robot having with an integral accessory backpack assembly that is positioned on a top surface of the robot chassis and on a back side of the robot chassis. The integral accessory backpack assembly having an inverted L shape. In embodiments the chassis in cross section having a generally square shape with each of the top, bottom, front and back sidewalls having exterior planar surfaces. In embodiments the top sidewall and back sidewall having planar surfaces for mounting the L shaped accessory backpack assembly. The corner of the "L" positioned at an upper rear corner of the chassis. A feature and advantage of embodiments is that the mounting of the L shaped accessory backpack assembly on the top sidewall and back sidewall is such that it does not impede the clearance for obstacles below the chassis. A further feature and advantage is that optimal use of the component protection region is provided with the L-shaped integral accessory backpack assembly. In embodiments the component protection envelope is enlarged in a rearward direction by way of the tail extending from the upright leg of the L-shaped integral accessory backpack assembly, that is, the rearward portion of the backpack assembly. The tail having sufficient stiffness to preclude impact of the rearward components on the chassis with an impact surface. The tail and each wheel cooperating to extend the component protection envelope rearwardly allowing the rearward portion of the backpack assembly to extend rearwardly out of the cylindrical component protection envelope defined by the maximum deflection radius of the wheels. In embodiments, the component protection envelope can be adjusted rearwardly by swapping out tails of different rigidity, or lateral flexibility, or length, or physical configuration. Alternatively, the component protection envelope can be adjusted rearwardly by adding an additional tail. Similar to the wheels, each tail having a maximum deformation limit which provides a minimal distance from the chassis that the tail will extend in deformation upon impact with a surface. The component protection envelope defined by the geometric space about the robot that a flat surface that is impacted by the robot in all different impact orientations, will not intrude. A generally rigid tail will provide a component protection envelope that extends from a deformation radius of each wheel, taken at the outermost portion of the wheel at that radius, to the full length of the tail.

A feature and advantage of embodiments is an L-shaped integral accessory backpack assembly that is attached to both a top wall and a back wall of the chassis providing a highly robust connection that even if there is an impact on the backpack assembly, the integrity of the connection is maintained. In embodiments, the L-shaped integral accessory backpack assembly comprises a backpack unit that is attachable and removable to the back wall of the chassis with one degree of freedom, an operational unit is attached to the top wall and also attached to the backpack unit thereby providing an integrated L-shaped backpack accessory assembly.

In embodiments, the integral backpack assembly comprises a hermetically sealed backpack unit and a hermetically sealed operational top wall mounted unit. In embodiments, the backpack unit and the operation top wall mounted unit are electrically connected by a cable. In embodiments, the backpack unit is electrically connected to the robot. In embodiments, when the backpack unit is electrically connected to the robot, a port on the accessory can receiving charging power for charging the robot batteries.

The accessory interfaces may be utilized for mounting accessories such as sensor devices, munitions, communication hardware, illumination devices, gas dispensing devices, or devices with other functionalities. The accessory may be operated remotely by way of a remote controller that operates the robot. Communications circuitry and operational circuitry may be separate from or included in the remote controller that operates the robot. In embodiments, the accessories have a cooperating robot interface allowing the accessory to be attached directly to, or by way of an intermediate bracket, to the accessory interface of the robot. The accessory having surfaces that abut with the planar landing surface and surfaces that engage the chassis in the landing recesses or on the landing sidewall surfaces. Such an arrangement minimizes transfer of impact forces to fasteners attaching the accessory to the robot. In embodiments, the backpack units as described herein may be mounted on the topside and/or the backside of the elongate body of the two wheeled throwable robot.

As described herein, accessories are attached to throwable robots used in military and policing operations with the robot and attached accessory maintaining essentially the same robustness and the survivability of the robot without the mounted accessory thereby allowing the robot and attached accessory to survive exposure to rugged conditions including exposure to dirt and water and large vertical drops. As described herein, accessories attached to throwable robots provide modularity, flexibility, and interchangeability allowing a single robot to be reconfigured to meet certain mission specific needs.

### DESCRIPTION OF THE DRAWINGS

FIG. 1 is a front perspective view of a throwable robot according to embodiments.
FIG. 2 is a rear perspective view of the throwable robot of FIG. 1.
FIG. 3 is an exploded view of a throwable robot according to embodiments.
FIG. 4 is top plan view of the body of a robot according to embodiments.
FIG. 5 is a perspective view of the body of FIG. 4.
FIG. 6 is a rear perspective view of a body according to embodiments.
FIG. 7 is a cross sectional view of a robot showing the attachment of an accessory.
FIG. 8 is an end elevational view of a robot showing the undeformed radius of wheels and the deformed radius under impact conditions.
FIG. 9 illustrates the accessory mounting region defined by the body and the component protection envelope defined by the maximum deformed radius of the wheel.
FIG. 10A is a perspective view of a robot chassis with a backpack component attached thereto.
FIG. 10B is a perspective exploded view of a backpack component and the chassis of FIG. 10A showing cooperating interface portions.
FIG. 11A is an exploded backside view of the backpack unit and robot chassis of FIG. 10A.
FIG. 11B is an exploded front side view of the backpack unit and robot chassis of FIG. 10A.
FIG. 12 is an elevational view of a robot with a tail showing a component protection envelope.
FIG. 13 is an end elevational view of the robot of FIG. 12 with a wheel removed for illustrative purposes showing the component protection envelope.
FIG. 14 is an elevational view of the robot of FIG. 12 in an impact condition with a flat surface showing the wheels in a maximum deflection state.
FIG. 15 is an end elevational view of the robot of FIG. 12 and 13 with a wheel removed for illustrative purposes in an impact condition with a flat surface showing the wheels in a maximum deflection state.
FIG. 16 is an elevational view of the robot of FIG. 12 and 13 in an impact condition with a flat surface on the back side of the robot illustrating the expanded component protection envelope provided by the tail.
FIG. 17 is an end elevational view of the robot of FIG. 12 and 13 with a wheel removed for illustrative purposes in an impact condition with a flat surface on the back side of the robot illustrating the expanded component protection envelope provided by the tail.
FIG. 18 is a perspective view of a backpack unit with an LED illumination/strobe unit attached thereto for mounting on a robot.
FIG. 19 is a perspective view of the backpack unit of FIG. 18 with the top cover removed from the LED unit.
FIG. 20 is a perspective view of another backpack unit with an LED unit attached thereto.
FIG. 21 is a perspective view of the backpack unit of FIG. 20 with two tail interfaces on the rearward side of the backpack unit and two tails attached thereto.
FIG. 22 is a front perspective view of the backpack unit and LED unit of FIGS. 20 and 21.
FIG. 23 is a rear perspective view of the backpack unit and LED unit of FIGS. 20 and 21.
FIG. 24 is a top elevation view of the component protection envelope of the robots and backpack units of FIGS. 18-23.
FIG. 25 is a perspective view of a backpack unit and an attached speaker unit.
FIG. 26 is an exploded perspective view of the speaker unit and the backpack of FIG. 25.
FIG. 27 is a front perspective view of a backpack unit with a heat sensing camera attached thereto.

### DETAILED DESCRIPTION

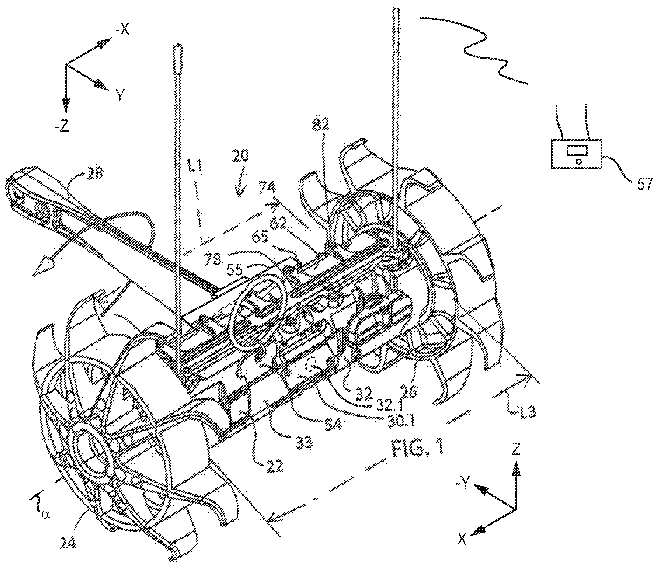

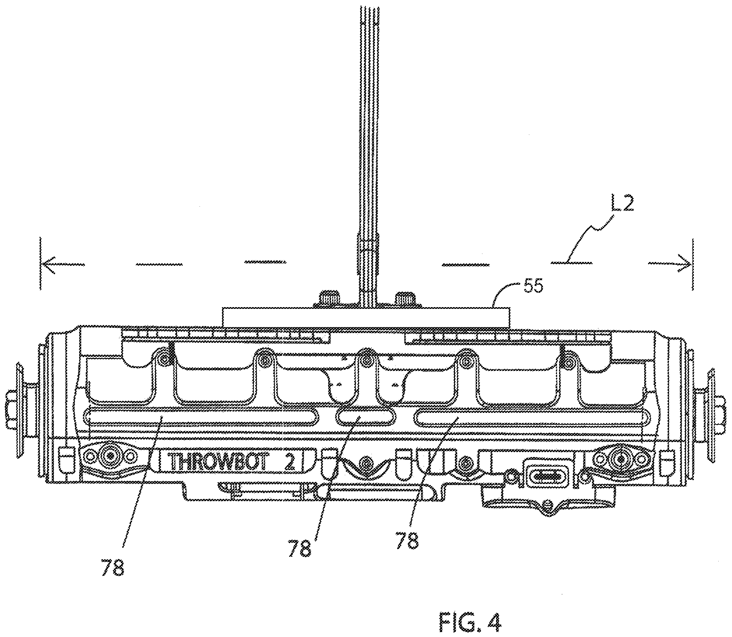

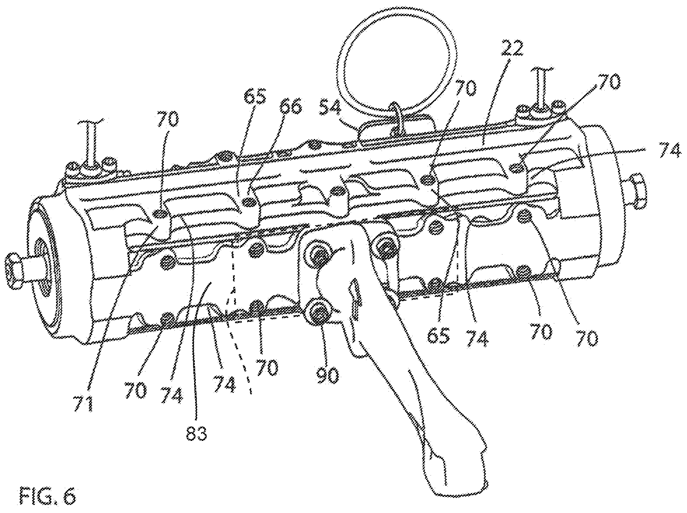

Referring to FIGS. 1-9, a throwable two wheeled robot 20 that generally comprises an elongate body 22, a pair of motorized wheels 24, 26, and a tail 28 centrally positioned between the wheels. The elongate body defining a chassis 32 for supporting componentry, such as a camera 32.1, and having a forward side 30.1, a rearward side 30.2, a top side 30.3, and a bottom side 30.4. The chassis 32, in embodiments, may be comprised of a pair of clam shell portions 33, 34. A seal ring 35 may provide sealing. One portion, a rear portion, having a deep recess 38 and the other a shallow recess 40. The chassis defining an interior 40 that contains a pair of motors 44, batteries, 48 and a circuit board 50. The robot may be actuated by withdrawing a key 53 from a key slot 54. The robot having an axis α extending through the rotational axis of the wheels and through the elongate body 22. The robot is remotely controlled by radio from a user interface 57. FIGS. 1-4 illustrate a backpack accessory mounted on the rearward side 30.2 with the tail 28 mounted on the backpack accessory 55.

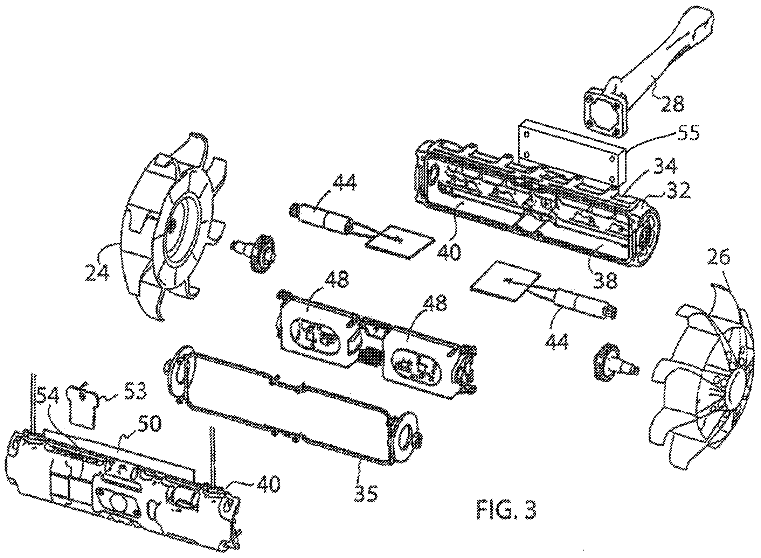

Referring to FIGS. 1, 2, and 4-7, details of an exterior surface 58 of the chassis 32 are illustrated providing accessory mounting interfaces 62, 63, one on the top side of the body and one on the rear side of the body. The interface surfaces each comprising a projection 65 that has a landing 66 with a planar landing surface 68, one or more threaded holes 70 extending from the planar landing surface 68, and landing sidewall portions 71 with landing sidewall surfaces 74. The landings may also have recesses 78 with chassis wall surfaces 79 defining the recesses. The holes defining a matrixical arrangement 82 of the holes having a length L1 that more than half (most of) the length L2 of the elongate body portion and more than half (most of) the distance between the wheels L3. In embodiments, there will be a line of threaded holes spaced about 25.4 millimetres apart in the direction of an axis of the elongate body. Additionally, holes will be spaced 25.4 millimetres from each other in a direction perpendicular to the line of holes parallel to the elongate body axis. In embodiments, particularly where the backpack accessory 55 is in the zone of protection provided by the maximum deflection of the wheels and/or the deflection resistance of the tail, as illustrated by FIGS. 1-5, the interface of the backpack accessory may be essentially planar, as best shown in FIG. 3 without the cooperating projection and recess structure described. FIG. 67 illustrates the planar seating surface 83 and the seating region 84 for the backpack accessory 55 as illustrated in FIGS 1-5.

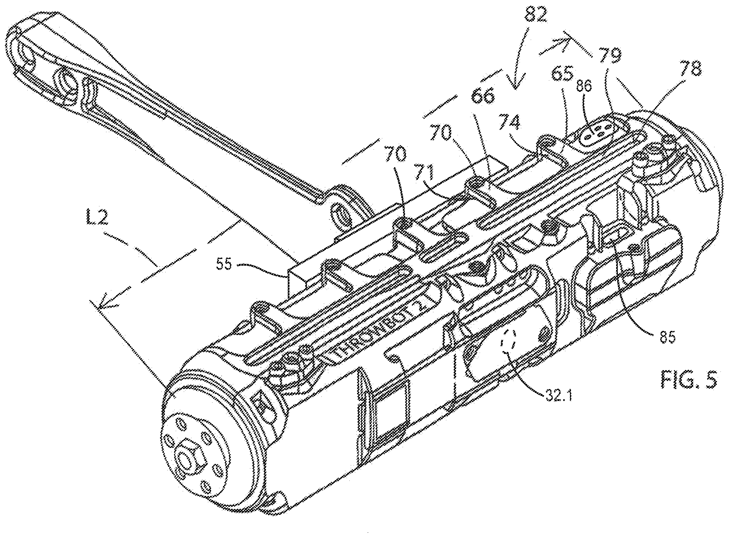

Referring to FIG. 5, the elongate body 22 of the robot may provide a power supply port 85, such as a USB port, for providing power to the backpack accessory. In embodiment, the housing may also have a pogo connector pad 86 for providing power to the backpack accessory. In embodiments, the power supply port may also be a charging port for the robot 20.

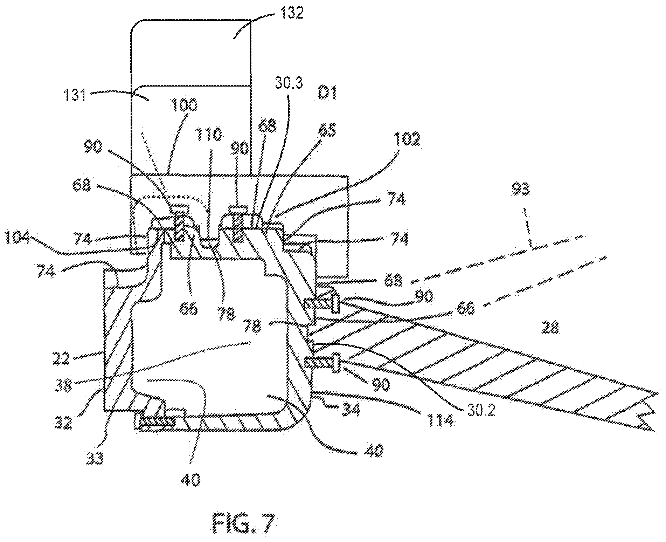

Referring to FIGS. 7-9, illustrates a backpack accessory attached to the topside 30.3 of the elongate body. As illustrated, in embodiments, the tail may be attached to the rearward side 30.2 by selected ones of one of the matrixical arrangements of the threaded holes at a landing 77 by way of threaded fasteners such as screws 90 and may be rotated 180 degrees to put the tail at a different position indicated by the dashed lines labeled 93. Another embodiment of a backpack accessory 100 may be attached to the chassis by a robot mounting interface 102 that includes surfaces 104 that abut the outwardly facing planar surfaces of the landing 66. Projections 110 may fit into one of the recesses 78. The accessory may wrap around and engage the rearward facing surface 114 of the rearward side of the chassis. The abutment of the accessory along surfaces that extend in the same direction as the axis 120 of the screws 90 allow the accessory to chassis interfaces to absorb shock that occurs upon impact after throwing the robot, rather than the screws. The arrangement of FIG. 7 provides, when the screws 90 are not connected, a one degree of freedom of movement, essentially moving the accessory in the direction D1.

The robot mounting interface of the accessory configured to cooperate with the accessory mounting interface of the robot chassis for providing the single degree of freedom of movement when the accessory is placed on the robot chassis for attachment thereto. The one degree of freedom may be provided by a C-shaped portion 123 as indicated by the dotted lines of FIG. 7. The portions of the C-shape portion corresponding to the upper and lower legs of a C may extend on opposite sides of a landing, or more generally a projection, providing protection from the screw shearing off or coming out of the threaded hole. Although FIG. 7 is in two dimensions, as can be seen from the perspective figures the mounting structure of the chassis is in three dimensions.

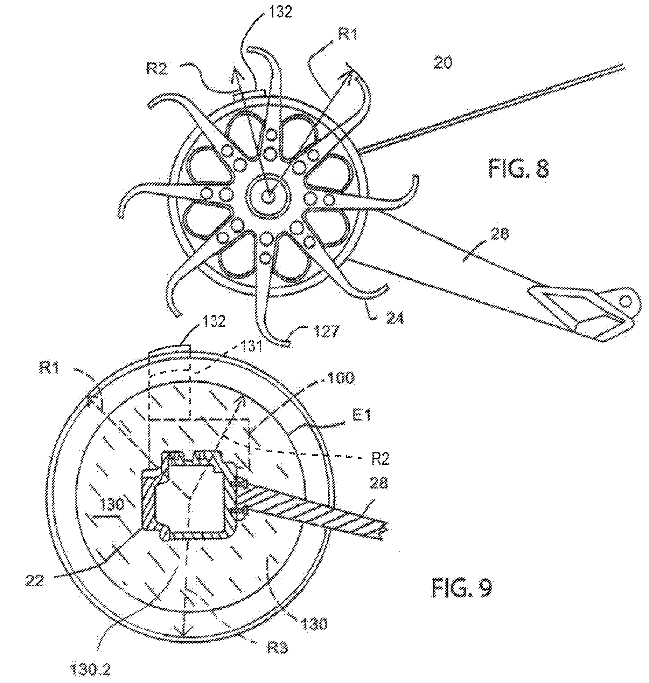

Referring to FIG. 8 and 9, in embodiments, the wheels have an undeformed or undeflected radius R1 and a maximum deformed radius condition that occurs under shock, such as upon impact when the robot is thrown or dropped to take the wheel to a maximum deflected radius R2. The radius R2 defining a cylindrical envelope E1. In operation, the wheels may slightly deform from the weight of the robot to an operational deflected radius R3, such as by tips 127 of the wheels slightly bending upon engagement with the floor or ground or other operational surface. The component protection envelope E1 is reflective of the maximum deflection expected of the wheels under normal impact conditions. The space between the envelope E1 and the body or chassis 32 defining the zone of protection or accessory mounting region 130. The sizing of the accessory 100 may within the accessory mounting region 130 thereby protecting the accessory from impact when throwing the robot with attached accessory. As illustrated in FIGS. 7-9, the accessory may have a projecting portion 131 that extends beyond the zone of protection. In such an instance, impact with the accessory when the robot is thrown, can damage the accessory and/or the robot. An elastomeric bumper 132 may be installed on the projecting end of the accessory or other convenient location such that impact when thrown will most likely be at the elastomeric bumper 132 rather than with a non-resilient accessory housing or component.

The accessory may be a sensor device, a munition, communication hardware, illumination device, gas dispensing device, or devices with other functionalities. The accessory may be powered by the robot or may have its own power source. The accessory may have its own communications module for communicating with a remote operator or may utilize communications provided by the robot. In embodiments, the accessory mounting region 130.2 below the chassis is not utilized thereby providing clearance for obstacles such as rocks during forward movement of the robot.

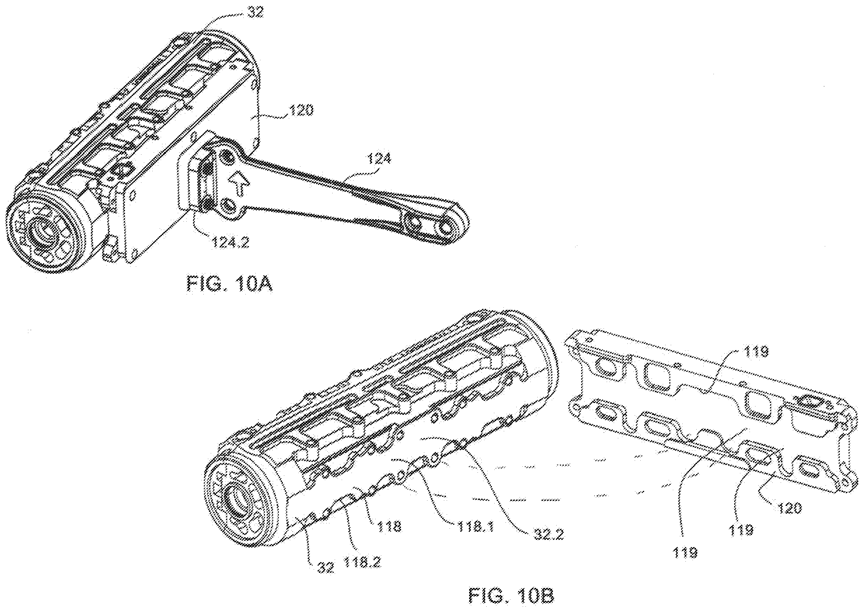

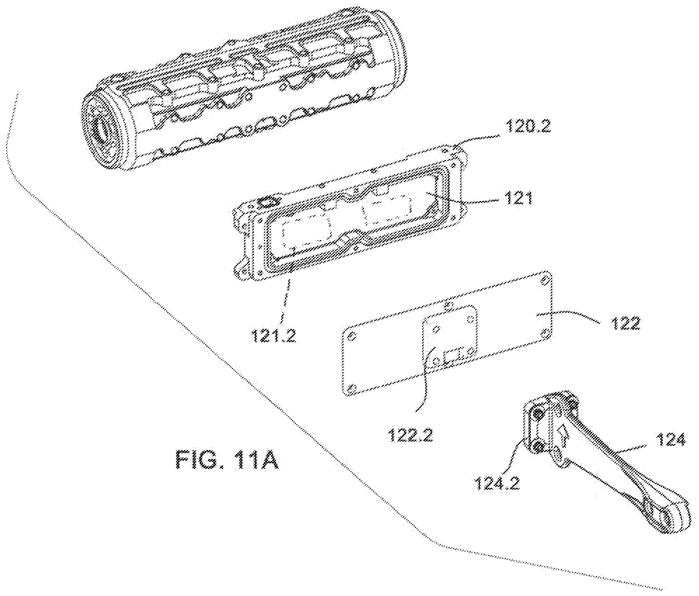

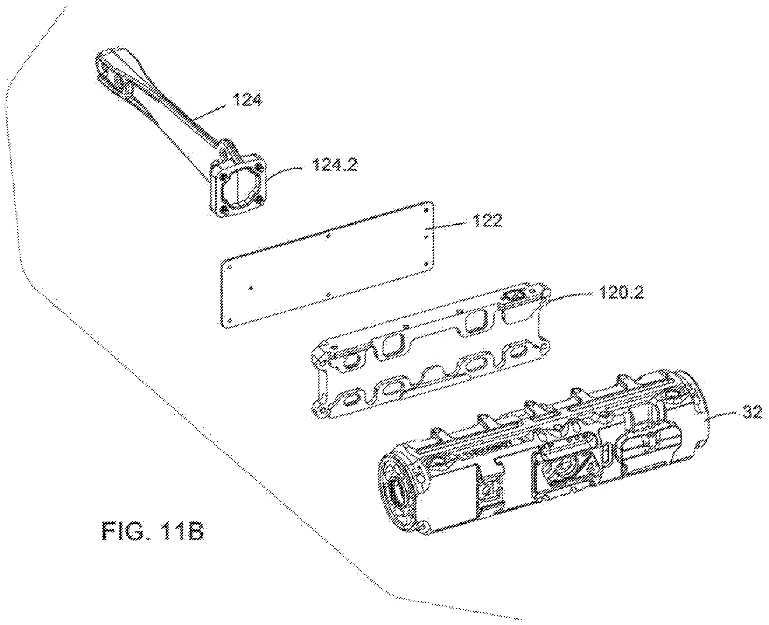

Referring to FIGS. 10A-13, in embodiments, a combination throwable two wheeled robot and backpack unit includes a backpack unit 120 coupled to a robot chassis 32. For purposes of clarity of illustration, the wheels are removed from the robot in FIGS. 10A-11B. The robot 20 generally comprises an elongate body 22 and a pair of motorized wheels 24, 26. The backpack unit 120 may be mountable on the chassis 32 of the robot 20 using cooperating interfaces 118, 119. One interface 118 is configured as an elongate projection 118.1 with serpentine edges 118.2 and the other interface 119 has a recess 119.1 with serpentine edges 119.2. The interfaces are conformingly shaped for providing a single freedom of movement for placement and removal of the backpack unit on the chassis. In embodiments, the backpack unit 120 has a backpack body 120.2 that defines a cavity 121 with backpack componentry 121.2, such as circuitry, and control processors, radios, such as recievers or transceivers, and memory, and that is coverable by a cover 122. The robot includes a tail 124 having a mounting portion configured as a flange 124.2 that is mountable to either a landing portion 122.2 of the cover 122 or a landing portion 32.2 of the robot chassis 32. In embodiments, when the backpack unit is placed on the robot without threaded fasteners attaching the backpack unit to the robot, the backpack unit has one degree of freedom of motion relative to robot, the one degree of freedom allowing the backpack unit to be pulled outwardly away from the robot. In embodiments, the direction of removal is transverse to the axis of the elongate body. In embodiments, the direction of removal is perpendicular to the longest axis of the elongate body. In embodiments, the direction of removal is perpendicular to a rotational axis of the robot wheels.

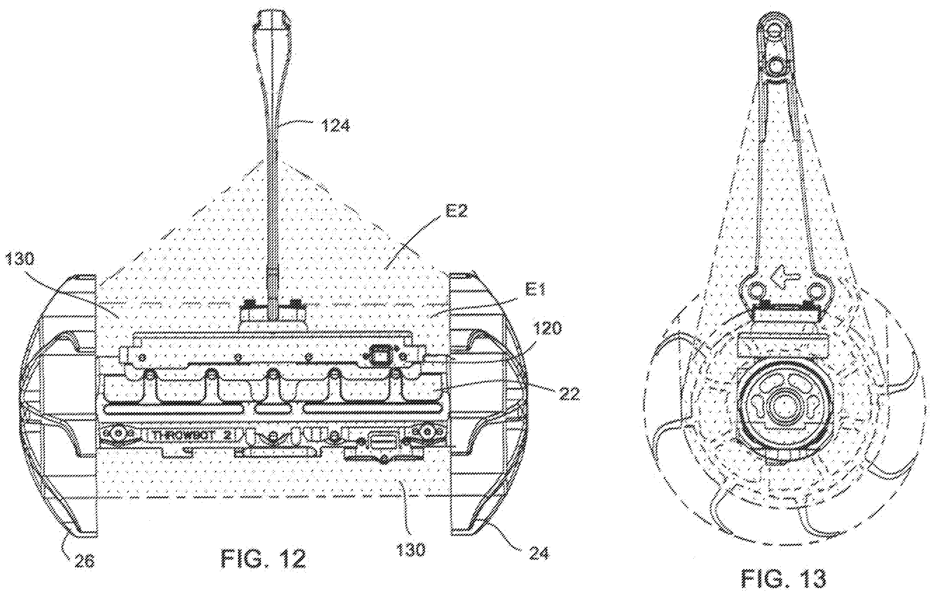

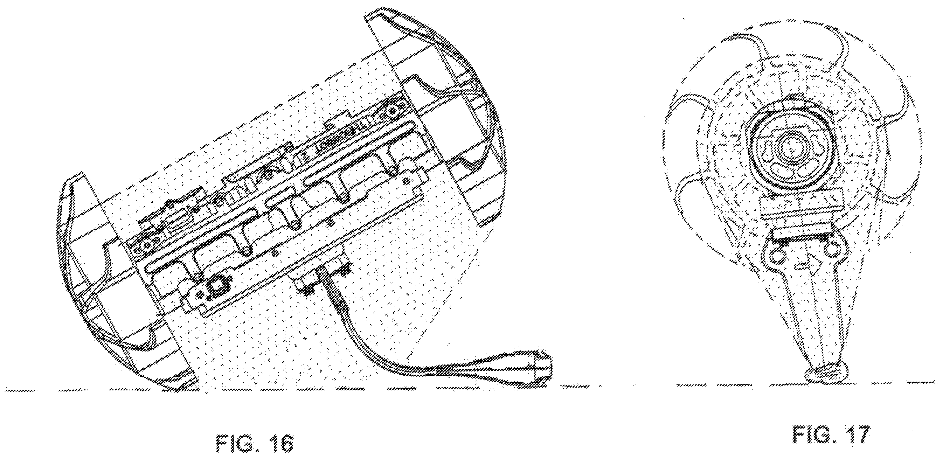

Referring to FIGS. 12-16, and as discussed with reference to FIG. 9 above, in embodiments, each of the wheels 24, 26 have an undeflected radius R1, and each wheel is deformable upon impact when thrown to a maximum deformed radius R2. In embodiments, the maximum deformed radius defines a cylindrical component protection envelope E1 extending between the wheels and the space between the elongate body and the cylindrical envelope defines an annular accessory mounting space 130. In embodiments, the backpack unit 120 is entirely within the annular accessory mounting space when the robot interfacing portion of the backpack body is mated with the landing portion of the chassis and the tail interfacing portion of the backpack body is mated with mounting portion of the tail. The backpack body extends rearwardly from the robot chassis and the tail extends rearwardly from the cover of the backpack. In embodiments, the tail provides an additional component protection envelope E2 continuous with the accessory mounting space as best illustrated in FIGS. 16 and 17. The rigidity of the tail can be tailored to adjust the size of the additional component protection envelope E2.

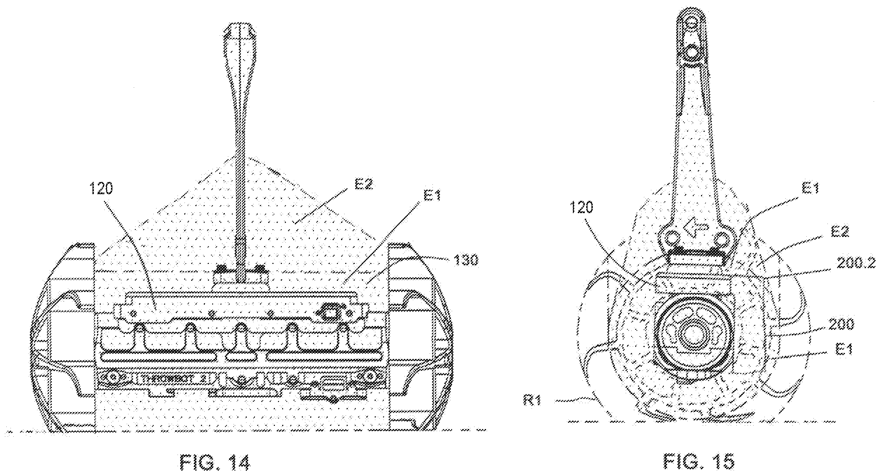

Referring to FIGS. 15 - 27, in embodiments, the backpack unit may be attached to an additional operational unit 200 for providing components/sensors for selected functionality, including but not limited to TDS (Distraction / Gas / Explosives), speakers, cameras (thermal, backup, etc), CBRNE sensors, flashlights / strobe lights, microphone arrays, motion sensors / range finders, various actuators (e.g., actuators that pick up objects and actuators that release a payload), various radios, and explosives such as Thermite. The operational unit 200 may be secured to both the top wall of the robot and to the backpack unit. Referring to FIG. 15, the operational unit is illustrated as having a portion 200.2 that extends out of the cylindrical component protection envelope E1 but is still contained within the tail extended component protection envelope E2.

Flashbang type munitions that may be suitable to be used as part of the backpack, some requiring modified actuation mechanisms are, for example U.S. Patents and Pat. Pubs. 10,494,314; 10,139,203; 9,726,466; 8,172,966; 2020/0333119; and 2008/0006171.

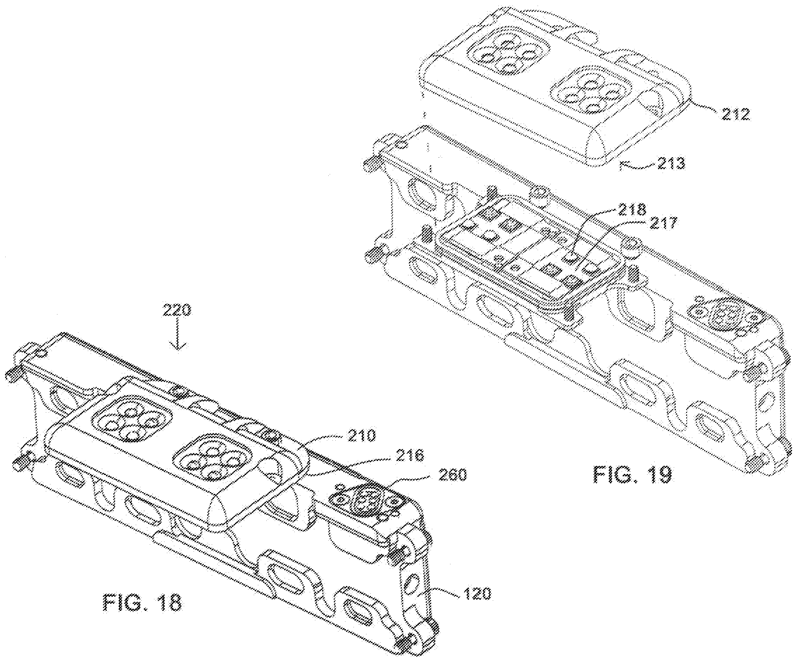

Referring to FIGS 18-27, various operational units suitable for attachment to the chassis of the robot and the backpack unit 120 are illustrated. FIGS. 18 and 19 illustrate an LED unit 210 with a housing 212 defining a cavity 213, backpack unit interface 216, circuitry with LED's 218. The LED unit 210 is secured to the backpack unit forming an integrated backpack assembly 220. In profile, an end view, the assembly 220 has an L-shape. A cable, not shown, may extend from the LED unit to the backpack unit for powering the unit and otherwise integrating them.

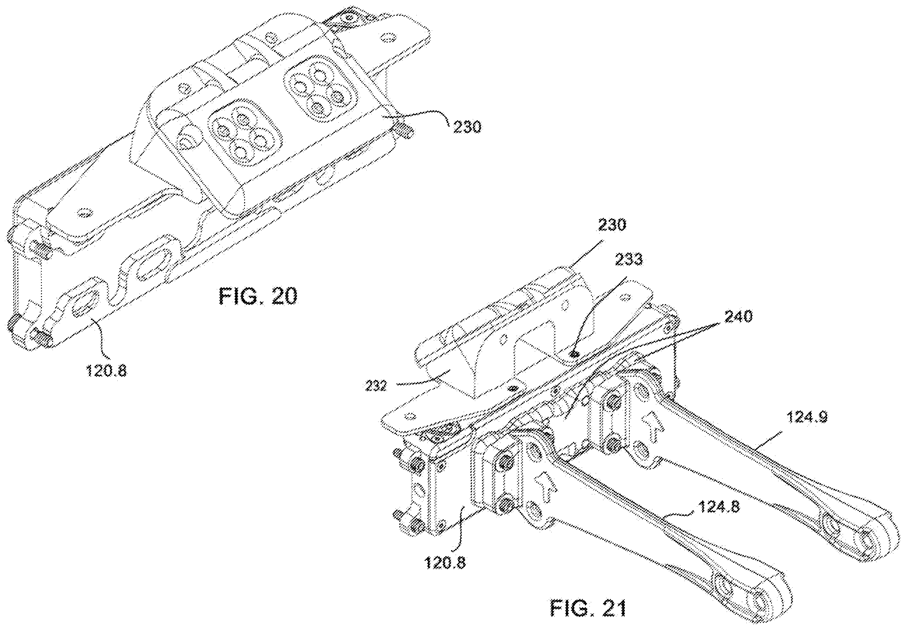

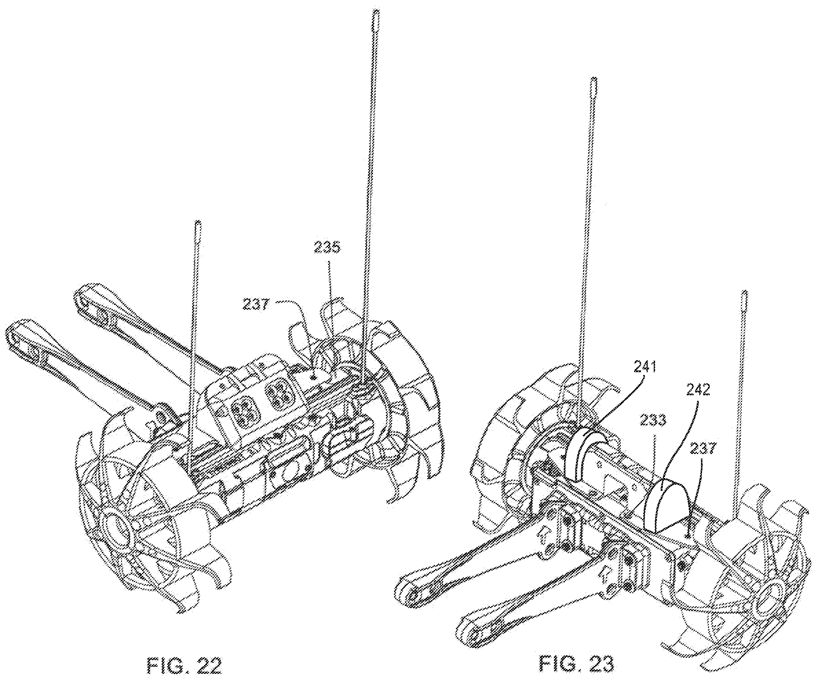

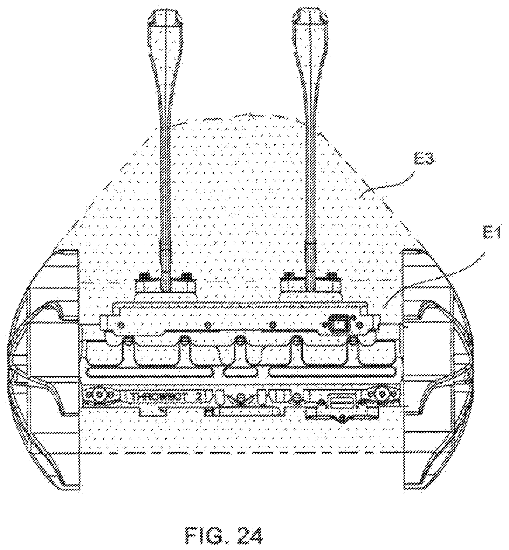

Referring to FIGS. 20-23, another LED unit 230 is illustrated with a LED orienting portion 232 directing the LED's more forwardly than the embodiment of FIG. 18. The LED unit attaches to the backpack unit 120.8 with screws 233 and extends over the top 235 of the robot and may be attached to the robot by screws 237 extending into select threaded holes of the matrixical arrangement of holes. In the example embodiment of FIG. 21, the backpack unit 120.8 has a plurality of tail mounting interfaces 240, and two of the interfaces are utilized for attachment of two tails 124.8, 124.9. Referring to FIG. 24, utilization of two tails may adjust the component protection envelope E3 provided by the two tails enlarging the component protection envelope relative to the component protection envelope provided by one tail. FIG. 23 illustrates the LED unit 230 protected by elastomeric bumpers 241, 242 that expand the zone of protection beyond that provided by the maximum wheel deflection diameter. The elastomeric bumpers may be attached by fasteners, such as screws, or rivets, or by way of adhesives or other methods known to those skilled in the art.

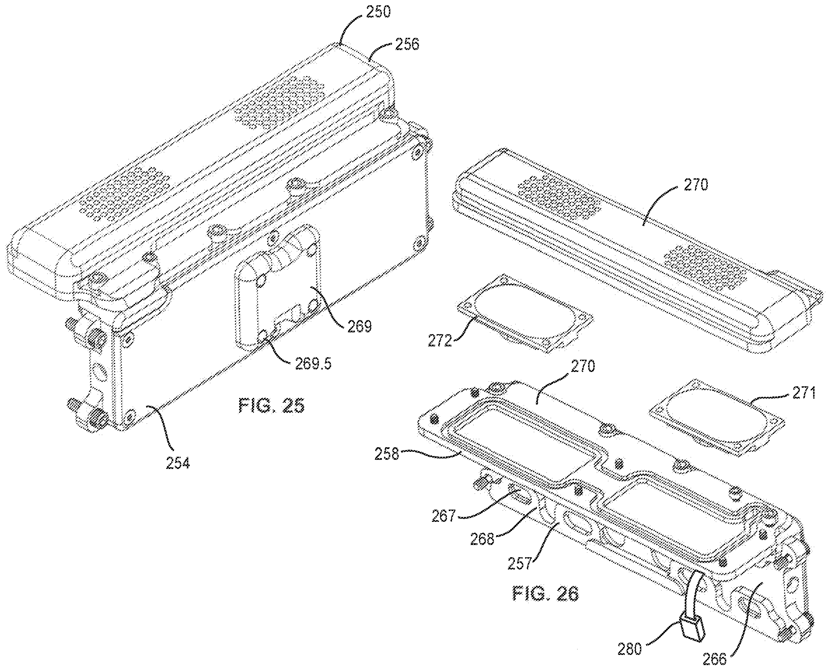

Referring to FIGS. 25 and 26, a backpack accessory 250 has an inverted L-shape when viewed on end, has a rearward or backside portion 254 and a topside portion 256. The backside portion having a forward facing robot interface surface 257 for mounting on the robot. The topside portion having a lower surface 258 that confronts and may seat or mount on the topside of the robot. In embodiments, the topside portion has components that provides environmental effects or environmental sensing and the back side has housing 260 containing, for example, control circuitry, communications componentry, battery power. The back side may be securely attached to the rearward side 30.2 of the elongate body and has complex interface structure 264 comprising landings 266, recesses 267, and projections 268, that cooperate with corresponding structure on the backside of the elongate body of the robot. Additionally, an attachment region 269 with threaded holes 269.5 is provided for attachment of the tail 28. The topside portion having a chassis 270, configured as a housing that contains operative elements 271, 272 for sensing or effecting the environment into which the robot is thrown. The operative elements may be for example, speakers, munition cartridges, including flashbang cartridges, or sensors. The backpack accessory may have a connector 280, such as a USB connector, for plugging into a power port 85 on the robot, such as shown in FIG 5. In embodiments, the power port of the two wheeled throwable robot operates as a charging port as well as a power out port. The backpack accessory may have a USB port 282 that allows the robot to be charged when the backpack accessory is mounted on the robot and the power port is utilized by the backpack accessory. That is, the backpack accessory circuitry allows the charging power provided to the accessory port 182 to be provided to the robot charging port 85, as shown in FIG. 5.

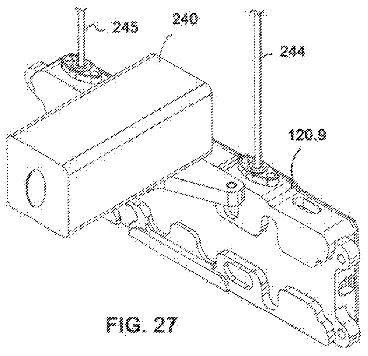

Referring to FIG. 27, in another embodiment, a thermal imaging camera unit 240 is integrated with the backpack unit and in profile has an L shape. The backpack unit 120.9 is illustrated with a pair of antennas 244, 245. The backpack unit may have a supplemental transmitting and receiving functionality separate from the transmitting and receiving functionality of the robot. In embodiments, the antennas of the backpack unit may replace the antennas of the robot such as the antennas shown in FIG. 1.

In embodiments, the backpack may have mounting holes and an area to route cables for each of the capabilities to be configured in manufacturing. In embodiments, the backpack is attached to robot through four screws and is powered through a USBC cable connected to the charging port on the robot.

In embodiments, the backpack is dimensioned and configured to fit between two wheels of the throwable robot. In embodiments, the backpack/accessory within the standard wheels may be rated to the same 9.144 metres drop rating as the throwable robot. In embodiments, the drop rating of the backpack/accessory is such that users may use the robot the same way every time whether or not the backpack/accessory is attached to the throwable robot. That is, particular accessory units may be contained within the component protection envelope. In embodiments, the backpack may be used with attachments that are too large to fit within an defined by the wheels and tail of the throwable robot. In such a case, the wheels may be replaced with larger wheels having a greater maximum deformation radius thereby increasing the size of the component protection envelope. Alternatively or additionally, a different or additional tail may be added to increase the envelope rearwardly. In embodiments, "maximal deformation" may be at the intended maximum drop distance. That is, the component protection envelope may be defined by the maximum deformation of the wheels and tail when the robot is dropped from 9.144 metres.

In embodiments, the backpack and/or accessory may be triggered though an operator control unit (OCU). In embodiments, the OCU has two buttons associated with backpack/accessory capabilities. In embodiments, a pushbutton may be used to trigger a desired action. In embodiments, a pushbutton may be pressed to enable a speaker, microphone, thermal camera, etc. In embodiments, a safety mechanism (e.g., a toggle switch and toggle guard in this case) is associated with a switch used to trigger a desired function. In embodiments, a switch with a safety mechanism is used to arm a TDS attachment.

FIGS. 18 and 19 depict a backpack assembly 120 with POGO pins 260 and mounting structure suitable for particular functional units such as TDS payloads (Distraction / Gas / Explosives), not shown except with respect to the generic unit of FIGS. 9 and 15. With reference to FIG. 15, mounting holes are seen on the top surface and the hole on the top left is used to route cables if needed.

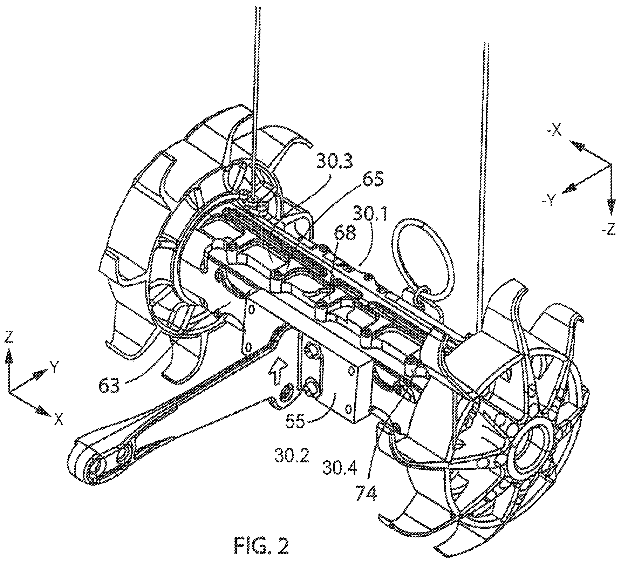

Referring to FIGS. 1 and 2, an upward direction Z and a downward or lower direction -Z are illustrated using arrows labeled "Z" and "-Z," respectively. A forward direction Y and a rearward direction -Y are illustrated using arrows labeled "Y" and "-Y," respectively. A starboard direction X and a port direction -X are illustrated using arrows labeled "X" and "-X," respectively. The directions illustrated using these arrows are applicable to the apparatus shown and discussed throughout this application. The port direction may also be referred to as the portward direction. In one or more embodiments, the upward direction is generally opposite the downward direction. In one or more embodiments, the upward direction and the downward direction are both generally orthogonal to an XY plane defined by the forward direction and the starboard direction. In one or more embodiments, the forward direction is generally opposite the rearward direction. In one or more embodiments, the forward direction and the rearward direction are both generally orthogonal to a ZY plane defined by the upward direction and the starboard direction. In one or more embodiments, the starboard direction is generally opposite the port direction. In one or more embodiments, starboard direction and the port direction are both generally orthogonal to a ZX plane defined by the upward direction and the forward direction. Various direction-indicating terms are used herein as a convenient way to discuss the objects shown in the figures. It will be appreciated that many direction indicating terms are related to the instant orientation of the object being described.

## Claims

1. Two wheeled throwable robot (20) and backpack accessory (55) comprising:
a pair of motorized wheels (24, 26) mounted on each end of an elongate body; (22)
a backpack accessory providing active sensing or environmental effects and having a forward facing surface of the rearward portion attached to the rearward side (30.2) of the elongate body, a stabilizing tail (28) extending from a rearward surface of the rearward portion of the backpack accessory, the backpack accessory electrically connected to the elongate body;
**characterized in that**
the backpack accessory is attached to an interface at the rearward side of the throwable robot, and **in that** the interface also receives a tail when the backpack accessory is not in place.

2. Two wheeled throwable robot and backpack accessory according to claim 1, wherein the back pack accessory has an inverted L-shape when viewed from an end.

3. Two wheeled throwable robot and backpack accessory according to claim 1 or 2, wherein the backpack accessory further comprises an upper portion attached to the rearward portion and extending over a topside of the body.

4. Two wheeled throwable robot and backpack accessory according to any one of claims 1 to 3, further comprising a second stabilizing tail extending from the rearward surface of the rearward portion of the backpack accessory.

5. Two wheeled throwable robot and backpack accessory according to claim 3, further comprising impact protection means when the robot is thrown, the impact protection means comprising an elastomeric bumper extending upwardly from the upper portion.

6. Two wheeled robot and backpack accessory according to any one of claims 1 to 4, further comprising an operational unit, wherein the operational unit provides a flashbang and the backpack accessory has a receiver therein.

7. Two wheeled robot and backpack accessory according to any one of claims 1 to 4, wherein the rearward portion has a rearward facing side with a pair of tail mounting interface thereon, each of the tail mounting interface including a plurality of holes.

8. Two wheeled throwable robot and backpack accessory according to claim 1, wherein the rearward portion of the backpack accessory has a forward facing robot interface surface, the rearward portion comprising a housing with circuitry therein, the rearward portion being elongate; and wherein the backpack accessory further comprises a topside portion at a topside of the rearward portion and extending forwardly, the topside portion having a chassis that secures a pair of operational components for providing environmental effects, the rearward portion and topside portion configured as an inverted L when viewed from an end.

9. Two wheeled throwable robot and backpack accessory according to any one of claims 1 to 4, wherein the accessory is one of a sensor, munition, communication device, illumination device, and gas dispensing device.

10. Two wheeled throwable robot and backpack accessory according to any one of claims 1 to 4, further comprising a power connector for providing the backpack accessory with power from the robot, and wherein the backpack accessory does not have a battery therein.

11. Method of protecting functional accessories for a two wheeled throwable robot, (20) the robot having a chassis (32) supporting two wheels (24, 26) and having an interface for a tail (28) extending rearwardly, the method **characterized by**: attaching a backpack unit (55) to a rear sidewall of the chassis, the backpack having an interface for a tail, and attaching a tail to the backpack unit.

12. Method according to claim 11, further comprising selecting a backpack unit that is within a component protection envelope defined by a maximum deformation radius of the two wheels and by the rear tail when mounted to the chassis.

13. Method according to claim 11, further comprising attaching a second tail to the backpack.

14. Method according to claim 11 or 13, further comprising attaching an elastomeric bumper to the backpack extending upwardly.

## Patentansprüche

1. Zweirädriger werfbarer Roboter (20) und Rucksackzubehör (55), umfassend:
ein Paar motorisierte Räder (24, 26), die an jedem Ende eines länglichen Körpers (22) angebracht sind;
ein Rucksackzubehör, das eine aktive Abtastung oder Umgebungseffekte bereitstellt und eine nach vorne weisende Oberfläche des rückwärtigen Abschnitts aufweist, der an der Rückseite (30.2) des länglichen Körpers angebracht ist, ein stabilisierendes Heck (28), das sich von einer rückwärtigen Oberfläche des rückwärtigen Abschnitts des Rucksackzubehörs erstreckt, wobei das Rucksackzubehör elektrisch mit dem länglichen Körper verbunden ist;
**dadurch gekennzeichnet, dass**
das Rucksackzubehör an einer Schnittstelle an der Rückseite des werfbaren Roboters befestigt ist, und dass die Schnittstelle auch ein Heck aufnimmt, wenn das Rucksackzubehör nicht angebracht ist.

2. Zweirädriger werfbarer Roboter und Rucksackzubehör nach Anspruch 1, wobei das Rucksackzubehör von einem Ende aus gesehen eine umgekehrte L-Form hat.

3. Zweirädriger werfbarer Roboter und Rucksackzubehör nach Anspruch 1 oder 2, wobei das Rucksackzubehör ferner einen oberen Abschnitt umfasst, der an dem rückwärtigen Abschnitt angebracht ist und sich über eine Oberseite des Körpers erstreckt.

4. Zweirädriger werfbarer Roboter und Rucksackzubehör nach einem der Ansprüche 1 bis 3, ferner umfassend ein zweites stabilisierendes Heck, das sich von der Rückseite des rückwärtigen Abschnitts des Rucksackzubehörs weg erstreckt.

5. Zweirädriger werfbarer Roboter und Rucksackzubehör nach Anspruch 3, ferner umfassend eine Aufprallschutzeinrichtung, wenn der Roboter geworfen wird, wobei die Aufprallschutzeinrichtung einen elastomeren Stoßfänger umfasst, der sich vom oberen Abschnitt nach oben erstreckt.

6. Zweirädriger Roboter und Rucksackzubehör nach einem der Ansprüche 1 bis 4, ferner umfassend eine Betriebseinheit, wobei die Betriebseinheit eine Blendgranate bereitstellt und das Rucksackzubehör einen Empfänger darin aufweist.

7. Zweirädriger Roboter und Rucksackzubehör nach einem der Ansprüche 1 bis 4, wobei der rückwärtige Abschnitt eine nach hinten weisende Seite mit einem Paar von Heckbefestigungsschnittstellen aufweist, wobei jede der Heckbefestigungsschnittstellen eine Vielzahl von Löchern enthält.

8. Zweirädriger werfbarer Roboter und Rucksackzubehör nach Anspruch 1, wobei der rückwärtige Abschnitt des Rucksackzubehörs eine nach vorne weisende Roboterschnittstellenfläche aufweist, wobei der rückwärtige Abschnitt ein Gehäuse mit einer darin befindlichen Schaltung umfasst, wobei der rückwärtige Abschnitt länglich ist; und wobei das Rucksackzubehör ferner einen Oberseitenabschnitt an einer Oberseite des rückwärtigen Abschnitts umfasst und sich nach vorne erstreckt, wobei der Oberseitenabschnitt ein Chassis aufweist, das ein Paar von Betriebskomponenten zur Bereitstellung von Umgebungseffekten sichert, wobei der rückwärtige Abschnitt und der Oberseitenabschnitt von einem Ende aus gesehen als ein umgekehrtes L konfiguriert sind.

9. Zweirädriger werfbarer Roboter und Rucksackzubehör nach einem der Ansprüche 1 bis 4, wobei es sich bei dem Zubehör um einen Sensor, Munition, eine Kommunikationsvorrichtung, eine Beleuchtungsvorrichtung oder eine Gasabgabevorrichtung handelt.

10. Zweirädriger werfbarer Roboter und Rucksackzubehör nach einem der Ansprüche 1 bis 4, ferner umfassend einen Stromanschluss, um das Rucksackzubehör mit Strom vom Roboter zu versorgen, wobei das Rucksackzubehör keine Batterie enthält.

11. Verfahren zum Schutz von funktionellem Zubehör für einen zweirädrigen werfbaren Roboter (20), wobei der Roboter ein Chassis (32) aufweist, das zwei Räder (24, 26) trägt und eine Schnittstelle für ein sich nach hinten erstreckendes Heck (28) aufweist,
**gekennzeichnet durch**
Anbringen einer Rucksackeinheit (55) an einer hinteren Seitenwand des Chassis, wobei der Rucksack eine Schnittstelle für ein Heck aufweist, und Anbringen eines Hecks an der Rucksackeinheit.

12. Verfahren nach Anspruch 11, ferner umfassend die Auswahl einer Rucksackeinheit, die innerhalb einer Komponentenschutzhülle liegt, die bei Montage am Chassis durch einen maximalen Verformungsradius der beiden Räder und durch das Heck definiert ist.

13. Verfahren nach Anspruch 11, ferner umfassend das Anbringen eines zweiten Hecks an dem Rucksack.

14. Verfahren nach Anspruch 11 oder 13, ferner umfassend das Anbringen eines elastomeren Stoßfängers an dem sich nach oben erstreckenden Rucksack.

## Revendications

1. Robot lançable à deux roues (20) et accessoire de sac à dos (55) comprenant :
une paire de roues motorisées (24, 26) montées à chaque extrémité d'un corps allongé (22) ;
un accessoire de sac à dos fournissant une détection active ou des effets environnementaux et ayant une surface orientée vers l'avant de la partie arrière attachée au côté arrière (30.2) du corps allongé, une queue de stabilisation (28) s'étendant à partir d'une surface arrière de la partie arrière de l'accessoire de sac à dos, l'accessoire de sac à dos étant électriquement connecté au corps allongé ;
**caractérisé en ce que**
l'accessoire de sac à dos est fixé à une interface sur le côté arrière du robot lançable, et l'interface reçoit également une queue lorsque l'accessoire de sac à dos n'est pas en place.

2. Robot lançable à deux roues et accessoire de sac à dos selon la revendication 1, dans lequel l'accessoire de sac à dos a une forme de L inversé lorsqu'il est vu d'une extrémité.

3. Robot lançable à deux roues et accessoire de sac à dos selon la revendication 1 ou 2, dans lequel l'accessoire de sac à dos comprend en outre une partie supérieure attachée à la partie arrière et s'étendant sur une face supérieure du corps.

4. Robot lançable à deux roues et accessoire de sac à dos selon l'une quelconque des revendications 1 à 3, comprenant en outre une deuxième queue de stabilisation s'étendant à partir de la surface arrière de la partie arrière de l'accessoire de sac à dos.

5. Robot lançable à deux roues et accessoire de sac à dos selon la revendication 3, comprenant en outre des moyens de protection contre les chocs lorsque le robot est lancé, les moyens de protection contre les chocs comprenant un pare-chocs en élastomère s'étendant vers le haut à partir de la partie supérieure.

6. Robot à deux roues et accessoire de sac à dos selon l'une quelconque des revendications 1 à 4, comprenant en outre une unité opérationnelle, l'unité opérationnelle fournissant une grenade assourdissante et l'accessoire de sac à dos contenant un récepteur.

7. Robot à deux roues et accessoire de sac à dos selon l'une quelconque des revendications 1 à 4, dans lequel la partie arrière a un côté orienté vers l'arrière avec une paire d'interfaces de montage de queue, chacune des interfaces de montage de queue comprenant une pluralité de trous.

8. Robot lançable à deux roues et accessoire de sac à dos selon la revendication 1, dans lequel la partie arrière de l'accessoire de sac à dos a une surface d'interface de robot orientée vers l'avant, la partie arrière comprenant un boîtier avec des circuits à l'intérieur, la partie arrière étant allongée ; et dans lequel l'accessoire de sac à dos comprend en outre une partie supérieure sur une face supérieure de la partie arrière et s'étendant vers l'avant, la partie supérieure ayant un châssis qui fixe une paire de composants opérationnels pour fournir des effets environnementaux, la partie arrière et la partie supérieure configurées comme un L inversé lorsqu'elles sont vues d'une extrémité.

9. Robot lançable à deux roues et accessoire de sac à dos selon l'une quelconque des revendications 1 à 4, dans lequel l'accessoire est un capteur, une munition, un dispositif de communication, un dispositif d'éclairage ou un dispositif de distribution de gaz.

10. Robot lançable à deux roues et accessoire de sac à dos selon l'une quelconque des revendications 1 à 4, comprenant en outre un connecteur d'alimentation pour alimenter l'accessoire de sac à dos à partir du robot, et dans lequel l'accessoire de sac à dos ne contient pas de batterie.

11. Méthode de protection d'accessoires fonctionnels pour un robot lançable à deux roues (20), le robot ayant un châssis (32) supportant deux roues (24, 26) et ayant une interface pour une queue (28) s'étendant vers l'arrière, la méthode étant **caractérisée par**:
la fixation d'une unité de sac à dos (55) à une paroi latérale arrière du châssis,
le sac à dos ayant une interface pour une queue, et fixer une queue à l'unité de sac à dos.

12. Méthode selon la revendication 11, comprenant en outre la sélection d'une unité de sac à dos qui se trouve dans une enveloppe de protection des composants définie par un rayon de déformation maximal des deux roues et de la queue arrière lorsqu'elles sont montées sur le châssis.

13. Méthode selon la revendication 11, comprenant en outre la fixation d'une deuxième queue au sac à dos.

14. Méthode selon la revendication 11 ou 13, comprenant en outre la fixation d'un pare-chocs en élastomère sur le sac à dos s'étendant vers le haut.
